## Europäisches Patentamt
## European Patent Office
## Office européen des brevets

(19)

(11) Numéro de publication: **0 140 771**
**B1**

(12) **FASCICULE DE BREVET EUROPEEN**

(45) Date de publication du fascicule du brevet:
08.10.86

(51) Int. Cl.⁴: **C 04 B 7/44**

(21) Numéro de dépôt: **84402013.1**

(22) Date de dépôt: **08.10.84**

(54) **Procédé et appareil pour la calcination des matières minérales réduites en poudre.**

(30) Priorité: **28.10.83 FR 8317270**

(43) Date de publication de la demande:
**08.05.85 Bulletin 85/19**

(45) Mention de la délivrance du brevet:
**08.10.86 Bulletin 86/41**

(84) Etats contractants désignés:
**BE CH DE GB IT LI LU NL**

(56) Documents cités:
**EP - A - 0 080 399**
**DE - A - 2 629 082**
**FR - A - 2 209 731**
**FR - A - 2 261 807**
**FR - A - 2 405 434**
**FR - A - 2 422 610**
**FR - A - 2 432 890**

(73) Titulaire: **FIVES-CAIL BABCOCK, Société anonyme, 7 rue Montalivet, F-75383 Paris Cedex 08 (FR)**

(72) Inventeur: **Henin, Jean-Pierre, 14, rue de la Concorde, F-59110 La Madeleine (FR)**
Inventeur: **Niel, Philippe, Résidence Les Clarisses 2, rue de l'Orphelinat, F-59000 Lille (FR)**

(74) Mandataire: **Fontanié, Etienne et al, FIVES-CAIL BABCOCK 7, rue Montalivet, F-75383 Paris Cedex 08 (FR)**

ACTORUM AG

# Description

La présente invention concerne la calcination des matières minérales en poudre par mise en suspension dans un courant gazeux constitué par un mélange d'un gaz comburant et d'un combustible dont la combustion fournit les calories nécessaires à cette réaction.

Dans les premières installations industrielles de ce type, on a utilisé comme combustible du fuel ou du gaz naturel. Mais compte tenu de leur prix élevé on a cherché à les remplacer par des combustibles moins coûteux. Cependant dans les procédés de calcination en suspension classiques où le combustible est injecté directement avec les matières à calciner dans la chambre de calcination, le choix du combustible est limité par des critères de qualité dépendant de l'aptitude à la combustion ou de sa composition (teneur en cendres, en soufre, etc.). Pour cette raison de nombreux combustibles solides dont le prix serait très compétitif n'ont pas été jusqu'à présent utilisés en calcination, comme par exemple les combustibles à très forte teneur en soufre, tels que certains charbons et le coke de pétrole, les combustibles très riches en cendres, tels que les schistes houillers ou bitumineux, les combustibles peu réactifs, les combustibles difficiles à conditionner tels que les déchets industriels, urbains ou domestiques et les boues de lavoir, les combustibles ayant des pouvoirs calorifiques très faibles, etc.

Le but de l'invention est de permettre l'utilisation de tels combustibles, seuls ou en mélange, pour la calcination de matières minérales et de réaliser un appareil capable de brûler plusieurs combustibles de ce type.

Le problème consiste, en général, à assurer une combustion correcte de ces combustibles et à éviter que certains composants ou produits de la combustion nocifs viennent se mélanger aux matières à calciner.

Le procédé de calcination objet de l'invention consiste à réaliser une gazéification dans un foyer à lit fluidisé d'un combustible solide dont les grains ont une grosseur comprise entre 0 et 20 mm, au moyen d'air insufflé de bas en haut dans le lit fluidisé, pour produire un gaz combustible qui se dégage du lit vers le haut en entraînant les particules les plus fines du combustible et à mélanger de l'air ou un autre gaz comburant et les matières à calciner à ce gaz combustible.

Le débit d'air insufflé dans le lit doit assurer la fluidisation du combustible et une gazéification stable; en général ce débit représente de 30% à 60% de l'air stœchiométrique correspondant à la combustion complète du combustible. La température du gaz combustible est d'environ 900 à 1100° C. Les fines particules entraînées par le gaz combustible représentent de 20% à 50% en masse du combustible, suivant sa nature, sa granulométrie et la géométrie du foyer.

Le mélange de l'air et du gaz combustible et l'injection des matières à calciner ont lieu dans une chambre de calcination distincte du foyer et reliée à celui-ci par une conduite dont la section utile est choisie pour que le gaz combustible y circulant ait une vitesse supérieure à la vitesse de chute libre des particules les plus grosses (par exemple: 20 m/s) pour éviter les retombées des particules solides dans le foyer. Cette disposition séparée de la chambre de calcination et du foyer permet d'optimiser la géométrie de ce dernier pour limiter les envolées des fines particules de combustibles et des cendres.

Dans la chambre de calcination, les gaz et les matières traitées circulent de bas en haut, le mélange de l'air et du gaz combustible et l'injection des matières à calciner s'effectuent dans la partie inférieure de la chambre, et les produits de la combustion et les matières calcinées sortent à son extrémité supérieure. La vitesse des gaz dans la chambre doit être suffisante pour entraîner les particules de matières traitées mais pas trop élevée pour que les fines particules de combustible séjournent un temps suffisant dans la chambre et puissent brûler complètement. Cette vitesse est de l'ordre de 5 à 10 m/s.

Si le combustible a un pouvoir calorifique moyen ou élevé, la température du lit atteindra 1000° C à 1200° C et les cendres s'aggloméreront, les agglomérats formés décantant dans le lit fluidisé et se déposant au fond de celui-ci; le fond du lit pourra être constitué par une grille mobile inclinée dont l'extrémité supérieure émerge du lit pour permettre d'évacuer ces agglomérats.

Dans le cas où le combustible a un faible pouvoir calorifique, la température du lit n'est pas suffisante pour permettre l'agglomération des cendres. Dans ce cas, on pourra, en utilisant un lit fluidisé dont la profondeur décroît progressivement et qui est alimenté en combustible à son extrémité de plus grande profondeur et en réduisant progressivement la vitesse de l'air traversant le lit depuis cette extrémité jusqu'à l'autre, assurer l'évacuation d'une partie au moins des cendres à cette autre extrémité du lit, soit par débordement, soit au moyen d'une grille mobile.

On pourra donc dans tous les cas utiliser des combustibles à forte teneur en cendres, sans que cela influe défavorablement sur la qualité des matières calcinées.

Dans les cas où on utilise des combustibles riches en soufre et en cendres, une partie du soufre est fixée par les cendres et éliminée avec celles-ci. Pour compléter cette action on peut injecter dans le lit fluidisé, avec le combustible, des particules de calcaire, chaux, dolomie, etc., qui capteront une partie du soufre. La granulométrie de ces particules sera choisie pour qu'elles soient efficacement fluidisées dans la partie active du lit et ne soient pas entraînées par le gaz combustible vers la chambre de calcination mais décantent et soient évacuées avec les cendres; on utilisera par exemple des particules dont les dimensions sont comprises entre 0,5 et 5 mm.

Généralement la calcination est suivie d'un refroidissement des matières calcinées et, suivant une autre caractéristique de l'invention, on utilisera avantageusement une partie de l'air de refroidissement à une température de l'ordre de 200° C à 300° C pour assurer la fluidisation et la combustion du combustible dans le lit fluidisé et une autre partie de cet air à une température de l'ordre de 800° C à 850° C sera mélangée au gaz combustible dans la chambre de calcination.

L'appareil de calcination objet de l'invention est caractérisé en ce qu'il comporte en combinaison: un gazogène à lit fluidisé formé d'une chambre, dont le fond est constitué par une grille, et équipé d'un dispositif d'alimentation en combustible solide et de moyens pour insuffler de l'air dans la chambre, à travers ladite grille, pour former au-dessus de la grille un lit fluidisé de combustible et pour assurer la gazéification de celui-ci, une chambre de calcination à axe vertical formée d'une partie supérieure cylindrique et d'une partie inférieure en forme de tronc de cône inversé et munie d'un distributeur d'air entourant ladite partie inférieure et communiquant avec l'intérieur de la chambre par des ouvertures percées dans sa paroi, d'une entrée pour les matières à calciner et d'une sortie située à son extrémité supérieure, et une conduite de liaison entre le gazogène et la chambre de calcination raccordée à la base de la chambre. Un séparateur cyclone est placé à la sortie de la chambre de calcination pour séparer les matières calcinées du courant gazeux.

La grille constituant le fond du gazogène est allongée et comporte au moins une portion terminale longitudinalement inclinée et permettant l'établissement d'un lit fluidisé dont la profondeur est progressivement variable; le dispositif d'alimentation est conçu pour introduire le combustible dans la partie la plus profonde du lit et des moyens sont prévus pour évacuer les cendres par-dessus l'extrémité supérieure de la grille.

Des moyens sont également prévus pour faire varier le débit d'air par unité de surface traversant la grille. Ces moyens peuvent être constitués par une série de caissons disposés côte à côte le long de la grille et des vannes contrôlant les débits d'air admis dans ces caissons. On peut aussi utiliser une grille à perméabilité variable.

D'autres caractéristiques de l'invention apparaîtront à la lecture de la description qui suit et se réfère aux dessins l'accompagnant qui illustrent, à titre d'exemple non limitatif, quelques réalisations de l'invention et sur lesquels:

La figure 1 est une vue en coupe d'un appareil de calcination conforme à l'invention;

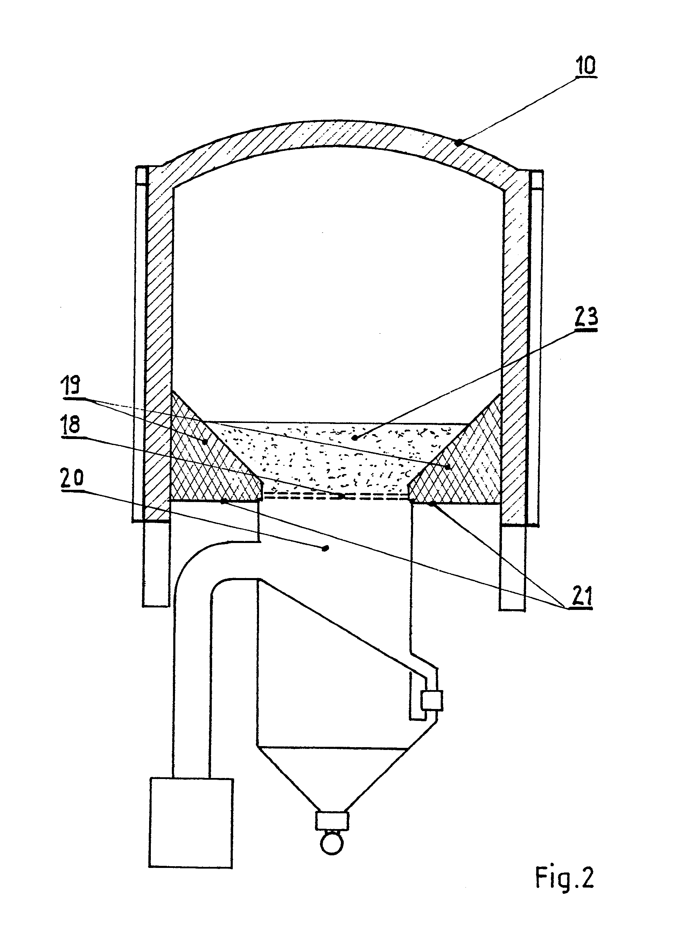

La figure 2 est une vue en coupe transversale, à grande échelle, du gazogène faisant partie de l'appareil de la figure 1;

La figure 3 est le schéma d'une installation de production de clinker de ciment comportant un appareil de calcination conforme à l'invention; et

Les figures 4 et 5 illustrent deux autres possibilités d'utilisation d'un appareil de calcination conforme à l'invention dans une cimenterie.

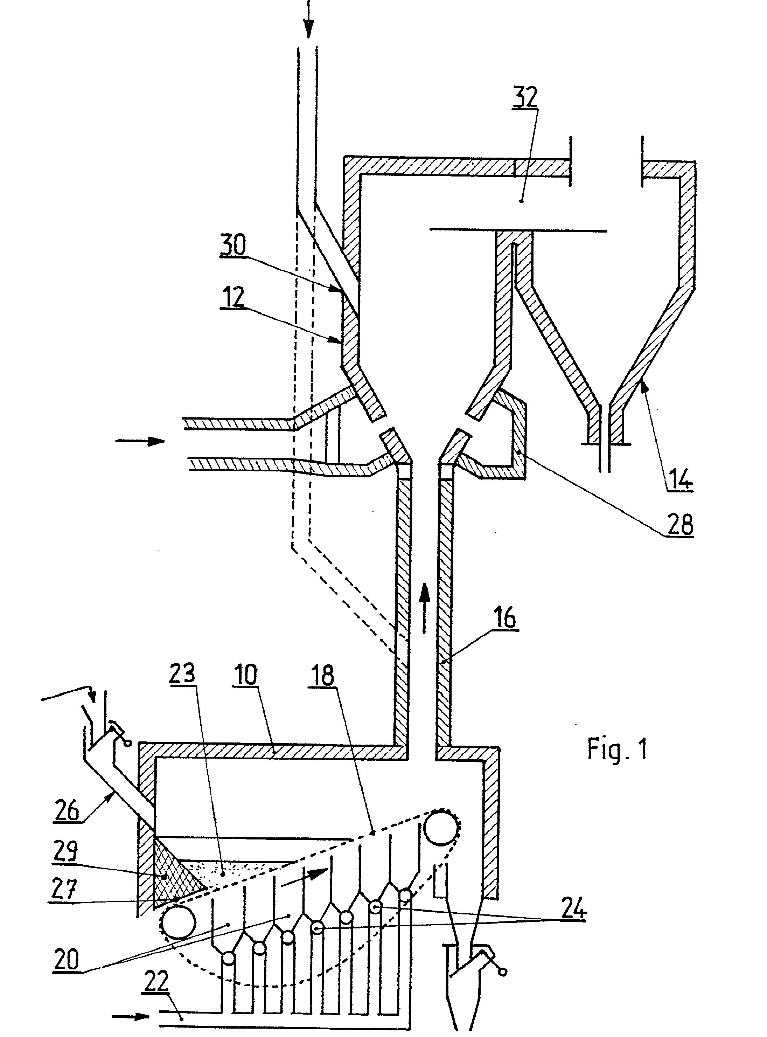

L'appareil représenté sur la figure 1 est constitué par un gazogène à lit fluidisé 10, une chambre de calcination en suspension 12, un cyclone 14 placé à la sortie de celle-ci et une conduite verticale 16 reliant le gazogène à la chambre de calcination.

Le gazogène 10 est formé d'une enceinte fermée dont le fond est constitué par une grille allongée 18, inclinée longitudinalement et bordée sur ses deux côtés par des surfaces sensiblement horizontales 21 sur lesquelles reposent, lorsque l'appareil est en service, des talus de combustible non fluidisé 19 de sorte que le lit fluidisé 23 a une section transversale trapézoïdale et évasée vers le haut. Dans l'exemple représenté la grille est constituée par le brin supérieur d'une chaîne sans fin formée de barreaux articulés entre eux et espacés transversalement les uns des autres pour permettre le passage d'air à travers la grille. Cette chaîne est supportée par deux tambours dont l'un au moins est moteur et permet d'entraîner la chaîne de telle sorte que son brin supérieur se déplace dans le sens ascendant.

Des caissons 20 placés sous la grille et reliés à une tuyauterie d'amenée d'air 22 permettent d'insuffler de l'air, de bas en haut, à travers la grille; des vannes 24 permettent de régler le débit d'air admis dans chaque caisson et traversant la partie correspondante de la grille.

Un dispositif d'alimentation en combustible 26 est prévu au-dessus de l'extrémité inférieure de la grille qui est protégée par un écran 27 sur lequel se forme, en marche, un talus de combustible non fluidisé 29.

Le combustible est généralement en morceaux de 0 à 10 ou 0 à 20 mm obtenus par concassage s'il s'agit de combustibles minéraux ou par déchiquetage si on utilise des déchets urbains ou végétaux. L'air injecté sous la grille au moyen de caissons 20 assure la fluidisation en lit très agité du combustible et sa combustion partielle. On injecte sous la grille le minimum d'air compatible avec une bonne agitation du lit et une bonne stabilité de la combustion partielle, soit 30% à 60% de l'air stœchiométrique. Le combustible est donc en partie brûlé et en partie gazéifié.

Grâce à la section trapézoïdale du lit fluidisé, on peut avoir des vitesses d'air élevées, supérieures à 10 m/s, dans le lit tout en conservant des vitesses de gaz relativement faibles dans la chambre du gazogène, au-dessus du lit, pour réduire les envols.

Au-dessus du lit fluidisé on obtient un gaz réducteur donc combustible dont la température est comprise entre 900° C et 1100° C et qui est chargé des particules les plus fines du combustible. Suivant la nature du combustible, sa granulométrie et la géométrie du gazogène, de 20% à 50% du combustible est ainsi entraîné hors du lit par le gaz combustible. Ce gaz chargé des fines particules du combustible est amené à la chambre de calcination 12 par la conduite verticale 16.

La chambre de calcination est une chambre de révolution, à axe vertical comprenant une partie inférieure en forme de tronc de cône inversé et une partie supérieure cylindrique. La conduite 16 est raccordée à la petite base de la partie tronconique de la chambre. Un distributeur d'air annulaire 28 entoure cette partie de la chambre et communique avec l'intérieur de celle-ci par des ouvertures percées dans sa paroi. Une entrée 30 est prévue pour les matières à calciner, approximativement à mi-hauteur de la chambre. En variante, une entrée pourrait être prévue sur la conduite 16, comme représenté en traits discontinus sur la figure 1. Une sortie 32 pour les produits de la combustion et les matières calcinées est ménagée à l'extrémité supérieure de la chambre. L'entrée du cyclone 14 est directement raccordée à la sortie 32.

La section de la conduite 16 est choisie pour que la vitesse des gaz qui y circulent soit suffisante pour éviter les retombées de matière dans le gazogène; cette vitesse devra être supérieure à 20 m/s.

Dans la chambre de calcination, l'air introduit au moyen du distributeur 28 est mélangé au gaz combustible et les matières à calciner sont mises en suspension dans ce mélange. La vitesse des gaz dans la partie cylindrique de la chambre de calcination doit être suffisante pour entraîner les particules des matières à calciner mais pas trop élevée pour que les fines particules de combustible de quelques centaines de microns en suspension dans les gaz séjournent un temps suffisant dans la chambre et puissent brûler complètement.

La combustion du gaz combustible et de ces fines particules fournit les calories nécessaires à la calcination. Les fumées produites par cette combustion et les matières calcinées sont évacuées par l'orifice 32, et dans le cyclone 14 les matières calcinées sont séparées des fumées.

Une grande partie — de 50% à 80% — des cendres qui se forment dans le lit fluidisé est évacuée au moyen de la grille 18. Lorsque le combustible a un pouvoir calorifique moyen ou élevé la température dans le lit fluidisé atteint 1000° C à 1100° C, ce qui provoque l'agglomération des cendres; les agglomérats formés décantent dans le lit et se déposent sur la grille qui les extrait du lit et les déverse, à son extrémité supérieure dans une trémie prévue à cet effet. Lorsque le combustible a un faible pouvoir calorifique, la température du lit fluidisé n'est pas suffisante pour permettre l'agglomération des cendres. Mais en diminuant le débit d'air par unité de surface de grille et, par conséquent, la vitesse de l'air dans le lit fluidisé en s'éloignant de la zone d'alimentation, c'est-à-dire au fur et à mesure que le lit devient profond, on permet le dépôt des cendres sur la partie supérieure de la grille et par conséquent leur extraction du lit et leur évacuation comme dans le cas précédent.

A la place d'une chaîne sans fin, on pourrait utiliser des grilles à barreaux mobiles, capables d'assurer le déplacement dans le sens ascendant des mâchefers ou des cendres. Au lieu d'être inclinée sur toute sa longueur, la grille pourrait comporter une portion horizontale à l'extrémité d'alimentation en combustible et une portion inclinée à l'extrémité d'évacuation des cendres et des mâchefers.

Dans le cas de combustibles riches en soufre et en cendres, une partie du soufre sera fixée par les cendres et éliminée avec celles-ci. Pour compléter la désulfuration, on peut injecter dans le lit, avec le combustible, des particules d'un agent désulfurant, tel que calcaire, chaux, dolomie, etc., qui capteront une partie du soufre. La granulométrie de ces particules sera étudiée pour qu'elles soient efficacement fluidisées dans la partie active du lit mais devra être assez grossière pour que les particules décantent dans le lit pour être évacuées avec les cendres et ne soient pas entraînées par le gaz combustible vers la chambre de calcination. La grosseur de ces particules sera par exemple comprise entre 0,5 et 5 mm.

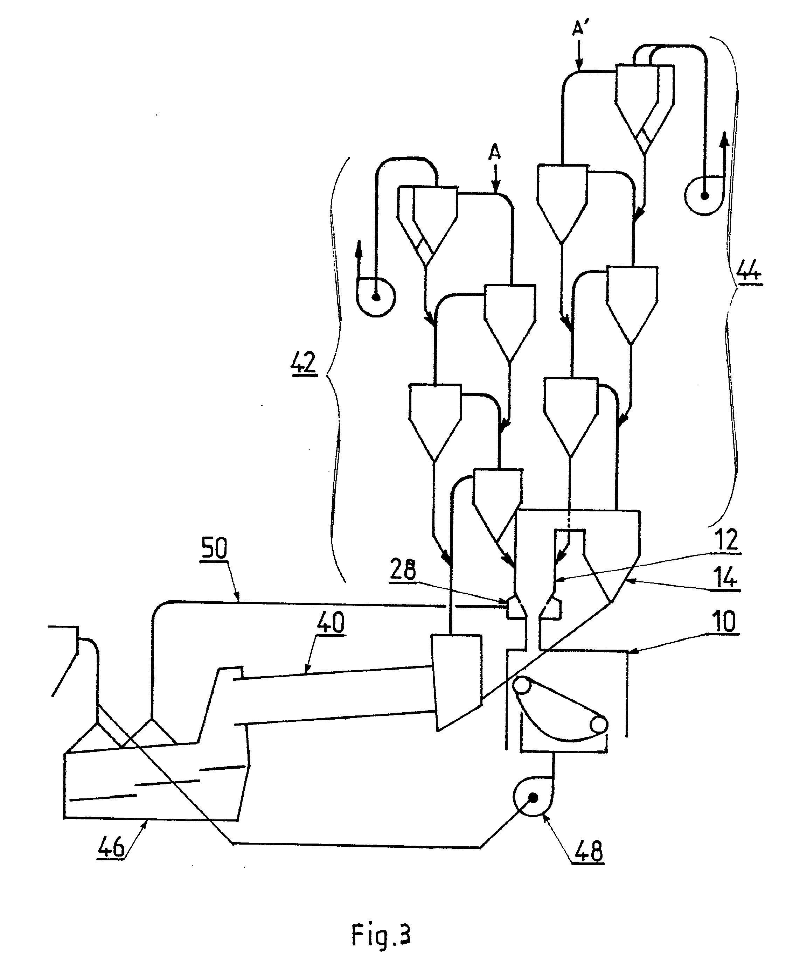

La figure 3 illustre un mode d'utilisation possible de l'appareil de calcination de l'invention en cimenterie. L'installation représentée comprend, outre l'appareil de calcination 10-12-14, un four tubulaire rotatif 40, deux échangeurs à cyclones 42 et 44 dont l'un est traversé par les fumées du four tandis que l'autre est traversé par les fumées de l'appareil de calcination, et un refroidisseur de clinker 46.

Une partie des matières premières est préchauffée dans l'échangeur 42 au moyen des fumées du four et l'autre partie est préchauffée dans l'échangeur 44 au moyen des fumées de l'appareil de calcination. Les matières préchauffées sortant du dernier cyclone de chaque échangeur sont introduites dans la chambre de calcination 12 qui est munie de deux entrées.

L'air utilisé dans le gazogène 10 pour fluidiser le combustible et assurer sa gazéification est prélevé, au moyen d'un ventilateur 48, sur l'exhaure du refroidisseur de clinker 46, à une température de l'ordre de 200° C à 300° C. L'air de combustion utilisé dans la chambre de calcination est prélevé sur le refroidisseur à une température de l'ordre de 800° C-850° C et amené au distributeur 28 par une tuyauterie 50.

Les matières calcinées sont évacuées à la pointe du cyclone 14 et introduites dans le four 40.

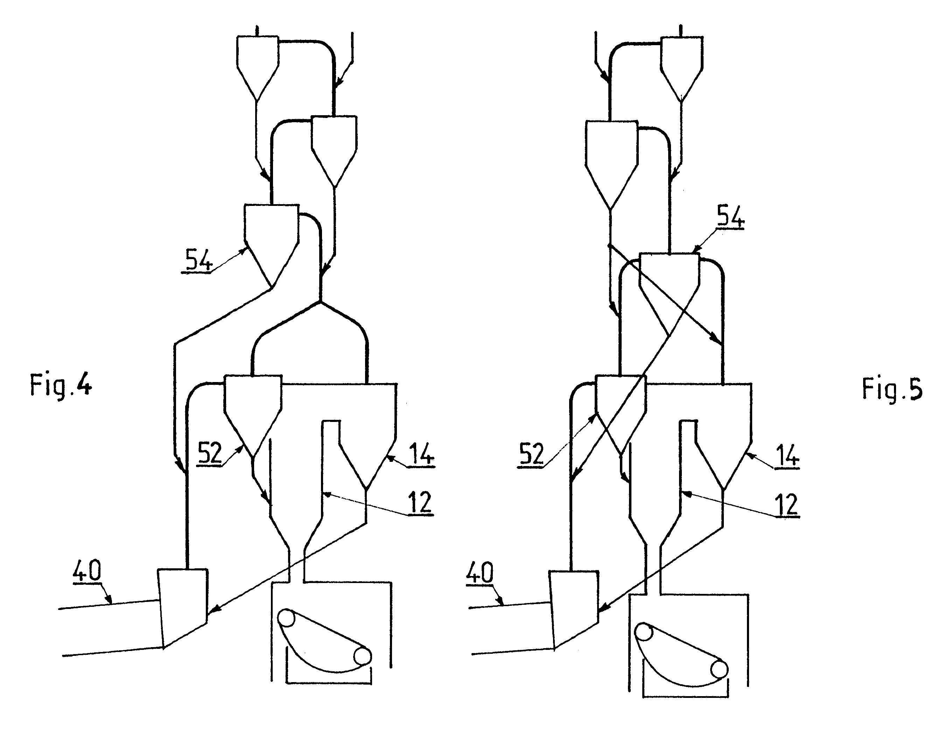

Pour des cimenteries de faible capacité, on peut n'utiliser qu'un seul échangeur à cyclones traversé par les fumées du four rotatif et de l'appareil de calcination. Cette solution est illustrée par les figures 4 et 5. Les fumées du four 40 passent dans un cyclone 52 avant d'être mélangées aux fumées de la chambre de calcination 12, soit dans le dernier cyclone 54 de l'échangeur (figure 5) soit en amont de celui-ci (figure 4).

Il est bien entendu que toutes les modifications qui peuvent être apportées aux modes de réalisation décrits par l'emploi de moyens techniques équivalents entrent dans le cadre de l'invention.

**Revendications**

1. Procédé pour la calcination des matières minérales réduites en poudre consistant à réaliser une gazéification dans un foyer à lit fluidisé (10) d'un combustible solide en morceaux au moyen d'air insufflé de bas en haut dans le lit fluidisé (23) pour produire un gaz combustible qui se dégage du lit vers le haut en entraînant les particules les plus fines du combustible et à mélanger de l'air et les matières à calciner à ce gaz combustible, la combustion du gaz combustible et des fines particules du combustible qu'il contient en suspension fournissant les calories nécessaires à la calcination.

2. Procédé de calcination selon la revendication 1, caractérisé en ce que l'air insufflé dans le lit flui-

disé (23) représente de 30% à 60% de l'air stœchiométrique correspondant à la combustion complète du combustible.

3. Procédé de calcination selon la revendication 1 ou 2, caractérisé en ce que les fines particules de combustible entraînées par le gaz combustible hors du lit fluidisé (23) représentent de 20% à 50% en masse du combustible.

4. Procédé de calcination selon la revendication 1, 2 ou 3, caractérisé en ce que la combustion du gaz combustible et des fines particules de combustible a lieu dans une chambre de calcination (12) séparée à laquelle le gaz combustible est amené par une conduite (16) sensiblement verticale où il circule dans le sens ascendant avec une vitesse supérieure à 20 m/s.

5. Procédé de calcination selon l'une quelconque des revendications précédentes, caractérisé en ce que la température dans le lit fluidisé (23) est comprise entre 1000° C et 1200° C et les cendres sont évacuées sous forme d'agglomérats qui se déposent au fond du lit.

6. Procédé de calcination selon l'une quelconque des revendications 1 à 4, caractérisé en ce que le lit fluidisé (23) a une profondeur qui décroît progressivement depuis une zone d'alimentation en combustible jusqu'à une zone d'évacuation des cendres et la vitesse de l'air traversant le lit décroît depuis la première jusqu'à la seconde zone.

7. Procédé de calcination selon l'une quelconque des revendications précédentes, caractérisé en ce que le lit fluidisé (23) a une section transversale trapézoïdale évasée vers le haut.

8. Procédé de calcination selon l'une quelconque des revendications précédentes, caractérisé en ce qu'on injecte dans le lit fluidisé (23) des particules d'un agent désulfurant dont les dimensions sont comprises entre 0,5 et 5 mm.

9. Procédé de calcination selon l'une quelconque des revendications précédentes, caractérisé en ce que les matières calcinées sont refroidies et, on utilise une partie de l'air de refroidissement, à une température de l'ordre de 200° C à 300° C, pour assurer la fluidisation et la combustion partielle du combustible dans le lit fluidisé, une autre partie de l'air de refroidissement, à une température de l'ordre de 800° C à 850° C étant utilisée pour assurer la combustion du gaz combustible et des fines particules de combustible.

10. Appareil pour la calcination des matières minérales réduites en poudre, caractérisé en ce qu'il comporte en combinaison un gazogène à lit fluidisé (10) formé d'une chambre, dont le fond est constitué par une grille (18), et équipé d'un dispositif d'alimentation en combustible solide (26) et de moyens (20, 22) pour insuffler de l'air dans la chambre, à travers ladite grille, une chambre de calcination (12) à axe vertical formée d'une partie supérieure cylindrique et d'une partie inférieure en forme de tronc de cône inversé et munie d'un distributeur d'air (28) entourant sa partie inférieure et communiquant avec l'intérieur de la chambre par des ouvertures percées dans sa paroi, d'une entrée (30) pour les matières à calciner et d'une sortie (32) située à son extrémité supérieure, et une conduite de liaison (16) entre le gazogène et la chambre de calcination raccordée à la base de cette dernière.

11. Appareil de calcination selon la revendication 10, caractérisé en ce que la grille (18) constituant le fond du gazogène est allongée et comporte au moins une portion terminale inclinée longitudinalement et permettant l'établissement d'un lit fluidisé dont la profondeur est progressivement variable, en ce que le dispositif d'alimentation (26) est agencé pour introduire le combustible dans la partie la plus profonde du lit et des moyens sont prévus pour évacuer les cendres par-dessus l'extrémité supérieure de la grille.

12. Appareil de calcination selon la revendication 11, caractérisé en ce que des moyens (24) sont prévus pour faire varier, d'une extrémité à l'autre de la grille les débits d'air par unité de surface de grille insufflés dans le lit fluidisé.

13. Appareil de calcination selon la revendication 11 ou 12, caractérisé en ce que la grille (18) est bordée, au moins sur ses grands côtés, de surfaces pleines (21) sur lesquelles se forment des talus de combustible non fluidisé (19) de sorte que le lit fluidisé (23) a une section transversale trapézoïdale et évasée vers le haut.

**Patentansprüche**

1. Verfahren zum Calcinieren pulverisierter Mineralstoffe, bestehend darin, in einer Wirbelbettfeuerung (10) die Vergasung eines stückigen festen Brennstoffes mittels von unten nach oben in das Wirbelbett (23) eingeblasener Luft durchzuführen, um ein brennbares Gas zu erzeugen, das vom Bett nach oben unter Mitnahme der feinsten Brennstoffpartikeln entweicht, und Luft sowie die Calcinierstoffe mit diesem Brenngas zu mischen, wobei die Verbrennung des Brenngases und der in ihm in Suspension enthaltenen feinen Brennstoffpartikeln die für die Calcinierung erforderlichen Kalorien liefert.

2. Calcinierverfahren nach Anspruch 1, dadurch gekennzeichnet, dass die in das Wirbelbett (23) eingeblasene Luft 30% bis 60% der der vollständigen Verbrennung des Brennstoffes entsprechenden stöchiometrischen Luft darstellt.

3. Calcinierverfahren nach Anspruch 1 oder 2, dadurch gekennzeichnet, dass die durch das brenngas ausserhalb des Wirbelbettes (23) mitgerissenen feinen Brennstoffpartikeln 20% bis 50% des Brennstoffgewichts darstellen.

4. Calcinierverfahren nach Anspruch 1, 2 oder 3, dadurch gekennzeichnet, dass die Verbrennung des Brenngases und der feinen Brennstoffpartikeln in einem getrennten Calcinierraum (12) stattfindet, dem das Brenngas durch eine beinahe vertikalen Leitung (16) zugeführt wird, in der es nach oben mit einer Geschwindigkeit von über 20 m/s strömt.

5. Calcinierverfahren nach irgendeinem der vorgehenden Ansprüche, dadurch gekennzeichnet, dass die Temperatur im Wirbelbett (23) zwischen 1000° C und 1200° C beträgt und die Asche in Form von am Boden des Wirbelbettes abgesetzten Agglomerate abgezogen werden.

6. Calcinierverfahren nach irgendeinem der Ansprüche 1 bis 4, dadurch gekennzeichnet, dass das Wirbelbett (23) von einer Brennstoffversorgungszone bis zu einer Ascheabzugszone allmählich weniger tief wird und die Geschwindigkeit der Luft durch das Bett von der ersten bis zur zweiten Zone abnimmt.

7. Calcinierverfahren nach irgendeinem der vorgehenden Ansprüche, dadurch gekennzeichnet, dass das Wirbelbett (23) einen sich nach oben erweiternden trapezförmigen Querschnitt aufweist.

8. Calcinierverfahren nach irgendeinem der vorgehenden Ansprüche; dadurch gekennzeichnet, dass man in das Wirbelbett (23) Partikeln eines Entschwefelungsmittels injiziert, deren Abmessungen zwischen 0,5 und 5 mm betragen.

9. Calcinierverfahren nach irgendeinem der vorgehenden Ansprüche, dadurch gekennzeichnet, dass die calcinierten Stoffe abgekühlt werden und man einen Teil der Abkühlungsluft bei einer Temperatur von etwa 200° C bis 300° C verwendet, um die Fluidisierung und die Teilverbrennung des Brennstoffes im Wirbelbett zu gewährleisten, während ein anderer Teil der Abkühlungsluft bei einer Temperatur von etwa 800° C bis 850° C für die Verbrennung des Brenngases und der feinen Brennstoffpartikeln verwendet wird.

10. Anlage zum Calcinieren pulverisierter Mineralstoffe dadurch gekennzeichnet, dass sie sich aus einem Gaserzeuger (10) mit Wirbelbett (10), der durch eine Kammer, deren Boden aus einem Rost (18) besteht, und der mit einer Speisevorrichtung (26) für festen Brennstoff und Mittel (20, 22) zur Lufteinblasung durch den Rost in die Kammer versehen ist, einem Calcinierraum (12) mit Vertikalachse, der aus einem zylindrischen Oberteil und einem Unterteil in Form eines umgekehrten Kegelstumpfes besteht und der mit einem seinen Unterteil umgebenden Luftverteiler (28), der mit dem Rauminneren durch in dessen Wand gebohrte Öffnungen verbunden ist, einem Eintritt (30) für die Calcinierstoffe und einem an seinem oberen Ende befindlichen Austritt (32) versehen ist, und aus einer unten an den Calcinierraum angeschlossene Verbindungsleitung (16) zwischen dem Gaserzeuger und dem Calcinierraum zusammensetzt.

11. Calcinieranlage nach Anspruch 10, dadurch gekennzeichnet, dass der den Boden des Gaserzeugers bildende Rost (18) länglich ist und mindestens eine längsgeneigte Endstrecke aufweist, die die Bildung eines Wirbelbettes ermöglicht, dessen Tiefe sich allmählich ändert, dass die Speisevorrichtung (26) so aufgebaut ist, dass der Brennstoff in den tiefsten Teil des Bettes eingeführt wird, und das Mittel zum Aschenabzug über die obere Rostende vorgesehen sind.

12. Calcinieranlage nach Anspruch 11, dadurch gekennzeichnet, dass Mittel vorgesehen sind, um die im Wirbelbett pro Rostflächeneinheit eingeblasenen Luftmengen von einem Rostende zum anderen variieren zu lassen.

13. Calcinieranlage nach Anspruch 11 oder 12, dadurch gekennzeichnet, dass der Rost (18) mindestens auf seinen Längsseiten mit vollwandigen Flächen (21) begrenzt ist, auf denen sich Böschungen (19) von nicht fluidisierten Brennstoff bilden, so dass das Wirbelbett (23) einen trapezförmigen und sich nach oben erweiternden Querschnitt aufweist.

## Claims

1. Process for the calcination of pulverized minerals consisting in carrying out gasification, in a fluidized bed furnace (10), of a solid fuel in lumps, by means of air blown upwards into the fluidized bed (23) to produce a fuel gas which rises upwards from the bed and takes with it the finest fuel particles, and in mixing air and the material to be calcined with this fuel gas, the combustion of the fuel gas and of the fine particles in suspension in it supplying the heat necessary for calcination.

2. Calcining process according to claim 1, characterized by the fact that the air blown into the fluidized bed (23) represents from 30% to 60% of the stoichiometric air corresponding to the full combustion of the fuel.

3. Calcining process according to claim 1 or 2, characterized by the fact that the fine fuel particles taken by the fuel gas from the fluidized bed (23) represent from 20% to 50% of the fuel mass.

4. Calcining process according to claim 1, 2 or 3, characterized by the fact that the combustion of the fuel gas and fine fuel particles takes place in a separate calcining chamber (12) to which the fuel gas is conveyed through an almost vertical duct (16) in which it flows upwards at a speed above 20 m/sec.

5. Calcining process according to any of the preceding claims, characterized by the fact that the temperature in the fluidized bed (23) lies between 1000° C and 1200° C and the ashes are discharged in the form of agglomerates which settle at the bottom of the bed.

6. Calcining process according to any of claims 1 to 4, characterized by the fact that the depth of the fluidized bed (23) decreases progressively from a fuel feeding zone to an ash discharge zone and by the fact that the speed of the air through the bed decreases from the first to the second zone.

7. Calcining process according to any of the preceding claims, characterized by the fact that the fluidised bed (23) has a transversal trapezoidal cross-section which widens towards the top.

8. Calcining process according to any of the preceding claims, characterized by the fact that particles of a desulphurizing agent, the size of which lies between 0.5 and 5 mm, are injected into the fluidized bed.

9. Calcining process according to any of the preceding claims, characterized by the fact that the calcined material is cooled and by the fact that part of the cooling air at a temperature in the region of 200° C to 300° C is used to ensure fluidization and the partial combustion of the fuel in the fluidized bed, another part of the cooling air, at a temperature in the region of 800° C to 850° C, being used to ensure the combustion of the fuel gas and the fine fuel particles.

10. Device for the calcination of pulverized minerals, characterized by the fact that it comprises in combination a fluidized bed gasifier (10) made up of a chamber, the bottom of which consists of a grate (18), and equipped with a solid fuel feeding device (26) and means (20-22) to blow air into the chamber through the said grate, a vertical calcining chamber (12) made up of a cylindrical upper part and a lower part in the form of an upside down truncated cone and fitted with an air distributor (28) surrounding its lower part and communicating with the inside of the chamber by openings drilled through its wall, with an inlet (30) for the material to be calcined and with an outlet (32) located at its upper end, and a connecting duct (16) between the gasifier and the calcining chamber which is connected to the bottom of the latter.

11. Calcining device according to claim 10, characterized by the fact that the grate (18) which constitutes the bottom of the gasifier is elongated and comprises at least one terminal portion, longitudinally inclined, which allows a fluidized bed to be set up, the depth of which is progressively variable, that the feeding device (26) is arranged so as to introduce the fuel into the deepest part of the bed and that means are provided to discharge the ashes over the upper end of the grate.

12. Calcining device according to claim 11, characterized by the fact that means (24) are provided to vary, from one end to the other end of the grate, the flow-rates, per grate surface unit, of the air blown into the fluidized bed.

13. Calcining device according to claim 11 or 12, characterized by the fact that the grate (18) is lined at least along its large sides with solid surfaces (21) on which non-fluidized fuel banks (19) are formed, which results in the fluidized bed (23) having a trapezoidal transversal cross-section which widens towards the top.

0 140 771

Fig. 1

Fig.2

Fig.3

Fig.4

Fig.5

0 140 771